# DEMANDE DE BREVET EUROPEEN

(11) **EP 2 977 262 A2**
(43) Date de publication de la demande: **27.01.2016**
(21) Numéro de dépôt: 15176825.6
(22) Date de dépôt: 15.07.2015
(51) Int. Cl.: B60Q 1/076, F16H 55/24

(54) **ACTIONNEUR POUR RENDRE AU MOINS UN ÉLÉMENT OPTIQUE MOBILE**

(30) Priorité: 23.07.2014 FR 1457094
(71) Demandeur: AML Systems, 75008 Paris (FR)
(72) Inventeur: CHIATTELLI, Claudio, 93150 Le Blanc-Mesnil (FR); RIVIER, Cyril, 92400 Courbevoie (FR); KOULOUH, Hassan, 93310 Le Pre Saint Gervais (FR)
(74) Mandataire: Gevers France

(57) **Abrégé**

L'invention concerne un actionneur électrique (1) pour rendre des éléments optiques mobiles, comprenant, un moteur (3), un ensemble de transmission mécanique (10) comprenant une vis sans fin (15), un élément de support de la vis sans fin (15), un moyen d'entraînement (20), un moyen de rappel (25), ledit moteur (3) étant configuré pour entraîner ledit ensemble de transmission mécanique (10) et ledit ensemble de transmission mécanique (10) étant configuré pour entraîner ledit moyen d'entraînement (20), caractérisé par le fait que ledit moyen de rappel (25) exerce une pression axiale contre la vis sans fin (15) de manière à plaquer la vis sans fin (15) contre l'élément de support.

L'invention concerne aussi un ensemble comprenant un élément optique mobile et un actionneur électrique (1) dudit élément optique mobile tel que décrit précédement.

## Description

Dans le domaine de l'éclairage automobile, il est connu d'avoir des phares tournants type DBL (pour "Dynamic Bending Light" en anglais) ou des éléments optiques mobiles pour les fonctions d'éclairage de feux adaptatif ADB (pour "Adaptive driving beam" en anglais).

Pour rendre les éléments optiques mobiles, il est courant d'utiliser des actionneurs électriques comprenant un moteur et un ensemble d'engrenage. Afin de démultiplier un maximum le mouvement en sortie du moteur dans un minimum d'espace, il est connu de munir l'ensemble d'engrenage, d'une vis sans fin en sortie du moteur combinée avec des engrenages droits transmettant le mouvement de la vis sans fin aux éléments optiques mobiles. Or, pour fonctionner efficacement et pour des raisons d'industrialisation, les actionneurs comportent des jeux de denture, entre les différents éléments de l'ensemble d'engrenage. Ces jeux ont un impact direct sur la précision de positionnement des éléments optiques.

Avec la généralisation des sources d'éclairage à LED et l'arrivée des sources laser, dont la particularité est d'avoir une source de lumière plus petite et plus concentrée, de tels jeux entraînent des erreurs importantes de positionnement des éléments optiques formant le faisceau.

Dans le but de rattraper un maximum du jeu que comprend l'ensemble d'engrenage, il est connu de positionner un ressort au niveau des engrenages droits de l'ensemble d'engrenage, transmettant le mouvement de rotation aux éléments optiques. Ce ressort plaque les deux engrenages droits l'un contre l'autre et rattrape ainsi un jeu radial entre ces deux engrenages, c'est-à-dire un jeu selon un axe parallèle aux axes de rotation des deux engrenages. Cependant, ce ressort ne permet pas d'annuler le jeu radial de la vis sans fin, défini par un angle de rotation autour de l'axe de la vis sans fin, ni le jeu axial de la vis sans fin, défini par une translation parallèle à l'axe de rotation de la vis sans fin. Or ces deux jeux différents peuvent avoir chacun et de manière indépendante une influence sur la position radiale de l'engrenage droit en contact avec la vis sans fin et donc sur le positionnement des éléments optiques mobiles.

L'invention vise à améliorer la situation et concerne, à cet effet, un actionneur électrique pour rendre mobile au moins un élément optique, comprenant :
- un moteur;
- un ensemble de transmission mécanique comprenant une vis sans fin ;
- un élément de support de la vis sans fin ;
- un moyen d'entraînement destiné à entraîner ledit élément optique mobile ;
- un moyen de rappel,
ledit moteur étant configuré pour entraîner ledit ensemble de transmission mécanique et ledit ensemble de transmission mécanique étant configuré pour entraîner ledit moyen d'entraînement, caractérisé par le fait que ledit moyen de rappel exerce une pression axiale contre la vis sans fin de manière à plaquer la vis sans fin contre l'élément de support.

Ainsi, grâce à la pression axiale exercée par le moyen de rappel sur la vis sans fin, le jeu axial de la vis sans fin avec son support est annulé, c'est-à-dire le seul jeu axial de l'actionneur ayant une influence sur le positionnement des éléments optiques est annulé. On entend par jeu axial, un jeu mesuré parallèlement à un arbre de rotation du moteur et notamment perpendiculaire à un axe de rotation du moyen d'entraînement.

L'invention permet ainsi d'améliorer le positionnement des éléments optiques mobiles en rotation participant notamment aux fonctions d'éclairage type DBL ou ADB tout en ayant une architecture mécanique capable d'avoir les performances de vitesse, couple, rendement suffisantes pour remplir la fonction.

Selon un aspect de l'invention, ledit moyen de rappel exerce une pression transversale contre ladite vis sans fin de manière à plaquer la vis sans fin contre l'élément de support. On entend par pression transversale, une pression dirigée selon une direction transversale à l'axe de rotation de la vis sans fin. Cette pression transversale permet d'annuler le jeu transversal de la vis sans fin avec son support qui ne pourra donc pas influencer le positionnement du moyen d'entraînement.

Avantageusement, ledit moyen de rappel est dimensionné pour bloquer radialement la vis sans fin pour tout moment de force appliqué à la vis sans fin inférieur ou égal à 1 millinewton par mètre. Le moyen de rappel permet de la sorte d'annuler un jeu radial de la vis sans fin avec son support.

Ainsi, l'invention permet, à l'aide d'un unique moyen de rappel, d'annuler trois jeux de l'actionneur ayant un effet sur le positionnement des éléments optiques mobiles : le jeu axial, le jeu transversal et le jeu radial de la vis sans fin avec son support.

Grâce à l'invention et en particulier au moyen de rappel permettant l'annulation des jeux de la vis sans fin avec son support, les vibrations exercées sur l'actionneur lorsque le véhicule automobile sur lequel il est positionné fonctionne, n'entraînent pas de mouvement de la vis sans fin susceptible de changer le positionnement du moyen d'entraînement et donc des éléments optiques mobiles.

Selon un mode de réalisation de l'invention, le moyen de rappel est solidaire du moyen d'entraînement.

Selon un aspect de l'invention, l'ensemble de transmission mécanique comprend un premier engrenage entre ledit moteur et ladite vis sans fin. La vis sans fin n'est donc pas positionnée directement en sortie du moteur. Le jeu axial de la vis peut être annulé plus facilement, car elle n'est pas en appui directement sur l'arbre du moteur, ce qui serait préjudiciable au bon fonctionnement de ce dernier.

Avantageusement, le premier engrenage est configuré pour démultiplier le mouvement du moteur transmis à la vis sans fin.

Selon un aspect de l'invention, l'ensemble de transmission mécanique comprend un secteur denté transmettant un mouvement de la vis sans fin au moyen d'entraînement.

Selon un mode de réalisation de l'invention, ledit moyen de rappel plaque le secteur denté sur la vis sans fin axialement et/ou transversalement. Le jeu entre le secteur denté et la vis sans fin est donc annulé. Il n'y a donc pas de jeu entre la vis sans fin et le moyen d'entraînement. On peut donc déterminer de façon précise le positionnement du moyen d'entraînement, et donc de l'élément optique mobile, par rapport au positionnement de la vis sans fin.

Selon un aspect de l'invention, ledit moyen de rappel est un ressort de torsion.

L'invention concerne aussi un ensemble comprenant un élément optique mobile et un actionneur électrique dudit élément optique mobile tel que défini précédemment.

D'autres caractéristiques et avantages de l'invention apparaîtront encore mieux à la lecture de la description qui suit d'exemple de réalisation du module optique de l'invention en référence au dessin annexé, sur lequel :

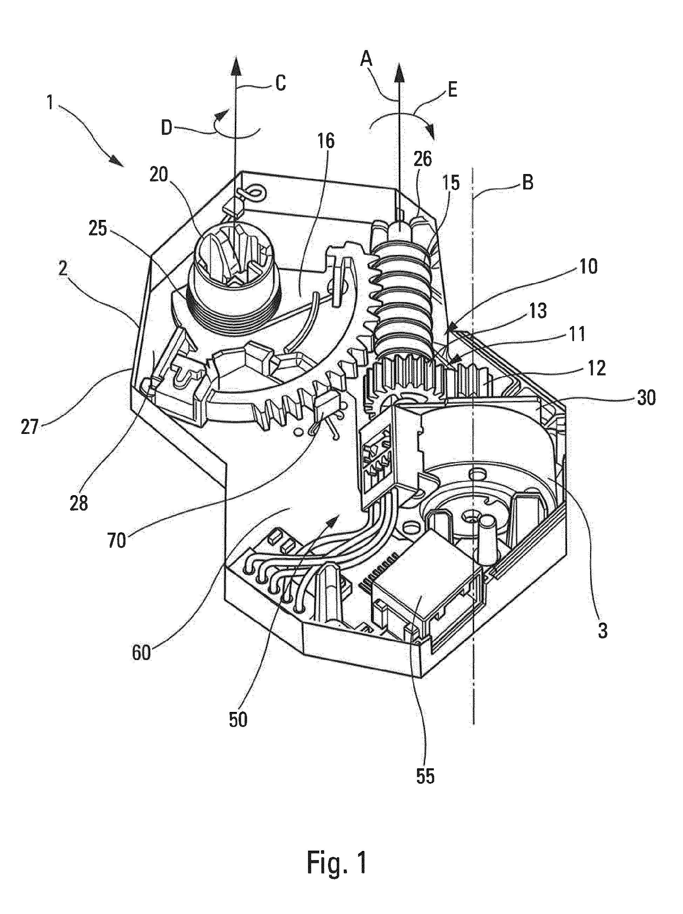

- la figure 1 est une vue en perspective d'un actionneur électrique conforme à l'invention.

L'invention concerne un actionneur électrique 1 pour rendre mobiles des éléments optiques, tel qu'illustré à la figure 1. Un tel actionneur électrique 1 comprend un boîtier 2 (dont seulement une moitié inférieure est représentée sur la figure 1). Le boîtier 2 comprend une plaque de fond 28, et une paroi périphérique 27.

L'actionneur électrique 1 comprend également un moteur électrique 3, un ensemble de transmission mécanique 10 et un moyen d'entraînement 20. L'ensemble de transmission mécanique 10 est agencé pour transmettre un mouvement du moteur électrique 3 au moyen d'entraînement 20. Ce dernier est configuré pour être relié à un élément optique non représenté et lui transmettre un mouvement du moteur. Le moteur 3 entraîne ici l'ensemble de transmission mécanique 10 par l'intermédiaire d'un arbre du moteur mis en rotation autour d'un axe B. On entend par élément optique mobile, tout élément optique d'un phare de véhicule, notamment automobile, pouvant être mobile, par exemple dans le but de modifier la forme et/ou la direction du faisceau lumineux émis par le phare, y compris le phare lui-même.

L'ensemble de transmission mécanique 10 comprend un premier engrenage 11 comportant ici deux roues dentées 12, 13, dites première et deuxième roues dentées 12, 13. La première roue dentée 12 est en particulier située en sortie du moteur 3, c'est-à-dire qu'elle est située dans le prolongement de l'arbre moteur. Le premier engrenage 11 permet de démultiplier le mouvement du moteur électrique 3, par exemple par 3. On comprend ici que lorsque le moteur électrique 3 fait trois tours, la première roue dentée 12 fait trois tours et la deuxième roue dentée 13 en fait un.

L'ensemble de transmission mécanique 10 comprend également une vis sans fin 15. La vis sans fin 15 est liée en rotation avec le premier engrenage 11. Elle tourne ici autour d'un axe de rotation A confondu avec l'axe de rotation de la deuxième roue dentée 13. L'axe de rotation A est parallèle à l'axe de rotation B de la première roue dentée 12.

La vis sans fin est ainsi libre en rotation autour de son axe de rotation A. Elle est montée sur un support. Le support comprend ici une plaque 30 s'étendant en particulier contre le moteur 3 de manière perpendiculaire à l'arbre moteur et une butée 26 faisant saillie par rapport aux parois latérales 27 du boîtier 2. Le support fait notamment partie intégrante du boîtier 2.

L'ensemble de transmission mécanique 10 comprend encore un secteur denté 16. Le secteur denté 16 transmet le mouvement de la vis sans fin 15 au moyen d'entraînement 20. Il est monté rotatif par rapport au boîtier 2 selon un axe de rotation C. L'axe de rotation du moyen d'entraînement 20 est confondu avec celui du secteur denté 16.

Dans la suite de la description, on entend par jeux radial, transversal et axial de la vis sans fin les jeux radial, transversal et axial de la vis sans fin relatifs à son support, c'est-à-dire le jeu entre la vis sans fin 15 et son support.

Selon l'invention, l'actionneur électrique 1 comprend un moyen de rappel 25 exerçant une pression axiale sur la vis sans fin 15 de manière à la plaquer contre son support. Ainsi, le moyen de rappel 25 pince la vis sans fin contre le boîtier 2 et en particulier contre la plaque 30 de manière à annuler le jeu axial de la vis sans fin 15. On entend par jeu axial, le jeu selon une direction axiale définie par l'arbre moteur, c'est-à-dire le jeu selon une direction parallèle à l'axe de rotation A. Ainsi, aucun mouvement axial de la vis sans fin n'est possible et aucun mouvement axial de la vis sans fin n'entraînera en rotation le moyen d'entraînement 20.

Le seul mouvement axial de l'ensemble de transmission susceptible d'entraîner en rotation le moyen d'entraînement 20 étant celui de la vis sans fin, l'invention permet ainsi d'annuler tous les jeux axiaux ayant une influence sur la position angulaire du moyen d'entraînement 20.

Le moyen de rappel 25 exerce également une force transversale sur la vis sans fin 15, c'est-à-dire une force dirigée selon une direction transversale à celle de l'axe de rotation de la vis sans fin, de manière à plaquer la vis sans fin contre son support. Aucun mouvement transversal de la vis sans fin n'est possible et aucun mouvement transversal de la vis sans fin n'entraînera en rotation le moyen d'entraînement 20.

Le même moyen de rappel permet ainsi d'annuler à la fois le jeu axial de la vis sans fin 15 et le jeu transversal de la vis sans fin 15.

Le moyen de rappel 25 est notamment situé sur le moyen d'entraînement. En particulier, et comme illustré sur la figure 1, le moyen de rappel 25 plaque le secteur denté 16 sur la vis sans fin 15 selon une direction axiale et par exemple transversale. Le moyen de rappel 25 est ici un ressort de torsion. Il exerce sur le secteur denté 16 une force radiale autour de l'axe de rotation C, dans le sens des aiguilles d'une montre par rapport à l'orientation de l'axe C, illustré par la flèche référencée D. Le moyen de rappel 25 plaque ainsi des dents du secteur denté 16 contre la vis sans fin 15 de manière à exercer les pressions axiale et transversale sur la vis sans fin 15 évoquées précédemment.

Le moyen de rappel 25 exerçant une pression axiale contre la vis sans fin 15 contraint la rotation de la vis sans fin selon une première direction radiale illustrée ici par la flèche E et correspondant à une rotation autour de l'axe de rotation A selon le sens des aiguilles d'une montre par rapport à l'orientation de l'axe de roation A. En effet, pour tourner selon cette direction, la vis sans fin doit pousser contre le moyen de rappel dans le sens opposé à la force axiale.

En outre, le pression axiale exercée sur la vis sans fin 15 par le moyen de rappel 25 crée une contrainte entre la vis sans fin 15 et son support, en particulier entre la vis sans fin 15 et la plaque 30 de sorte que la rotation de la vis sans fin selon les deux sens de rotation est contrainte. Autrement dit, la vis sans fin 15 est pincée axialement par le moyen de rappel 25 contre le boîtier 2, notamment au niveau de la plaque 30, de sorte que sa rotation est également bloquée par frottement entre la vis sans fin 15 et le boîtier 2.

Le moyen de rappel 25 bloque ainsi radialement la vis sans fin 15 dans les deux directions de rotation autour de son axe de rotation. Le moyen de rappel est dimensionné pour contrer tout moment de force appliqué à la vis sans fin 15 qui soit inférieur ou égal à 1 millinewton par mètre.

L'actionneur électrique comprend également un système de commande 50 du moteur comprenant un connecteur 55 et une carte électronique 60.

Il comprend en outre un capteur de position 70, configurée pour détecter la position angulaire du moyen d'entraînement 20, ici par l'intermédiaire du secteur denté 16. Le capteur de position 70 est lié à la carte électronique 60 afin de lui transmettre la position du moyen d'entraînement 20. Le système de commande 50, grâce à l'information reçue par le capteur de position 70, peut alors actionner le moteur afin de corriger une éventuelle erreur de positionnement.

## Revendications

1. Actionneur électrique (1) pour rendre au moins un élément optique mobile, comprenant :
- un moteur (3) ;
- un ensemble de transmission mécanique (10) comprenant une vis sans fin (15) ;
- un élément de support de la vis sans fin (15) ;
- un moyen d'entraînement (20) destiné à entraîner ledit élément optique mobile ; et
- un moyen de rappel (25),
ledit moteur (3) étant configuré pour entraîner ledit ensemble de transmission mécanique (10) et ledit ensemble de transmission mécanique (10) étant configuré pour entraîner ledit moyen d'entraînement (20), ledit moyen de rappel (25) exercant une pression axiale contre la vis sans fin (15) de manière à plaquer la vis sans fin (15) contre l'élément de support, **caractérisé en ce que** l'ensemble de transmission mécanique (10) comprend un premier engrenage (11) entre ledit moteur (3) et ladite vis sans fin (15).

2. Actionneur électrique (1) selon la revendication 1, dans lequel ledit moyen de rappel (25) exerce une pression transversale contre ladite vis sans fin (15) de manière à plaquer la vis sans fin (15) contre l'élément de support.

3. Actionneur électrique (1) selon l'une quelconque des revendications précédentes, dans lequel ledit moyen de rappel (25) est dimensionné pour bloquer radialement la vis sans fin (15) pour tout moment de force appliqué à la vis sans fin (15) inférieur ou égal à 1 millinewton par mètre.

4. Actionneur électrique (1) selon l'une quelconque des revendications précédentes, dans lequel le moyen de rappel (25) est solidaire du moyen d'entraînement (20).

5. Actionneur électrique (1) selon l'une quelconque des revendications précédentes, dans lequel le premier engrenage (11) est configuré pour démultiplier le mouvement du moteur (3) transmis à la vis sans fin (15).

6. Actionneur électrique (1) selon l'une quelconque des revendications précédentes, dans lequel l'ensemble de transmission mécanique (10) comprend un secteur denté (16) transmettant un mouvement de la vis sans fin (15) au moyen d'entraînement (20).

7. Actionneur électrique (1) selon la revendication 6, dans lequel ledit moyen de rappel (25) plaque le secteur denté (16) sur la vis sans fin (15) axialement et/ou transversalement.

8. Actionneur électrique (1) selon l'une quelconque des revendications précédentes, dans lequel ledit moyen de rappel (25) est un ressort de torsion.

9. Ensemble comprenant un élément optique mobile et un actionneur électrique (1) dudit élément optique mobile selon l'une quelconque des revendications précédentes.
